# EUROPEAN PATENT SPECIFICATION

(11) **EP 3 201 155 B1**
(45) Date of publication and mention of the grant of the patent: **28.10.2020**
(21) Application number: 15791748.5
(22) Date of filing: 02.10.2015
(51) Int. Cl.: C04B 28/02, C04B 18/22, C04B 111/52, C04B 111/60, C04B 111/00

(54) **LIGHTWEIGHT RESILIENT CONCRETE SUB-BASE LAYER WITH RECYCLED RUBBER FROM DISCARDED TYRES WITH REDUCED WALKING IMPACT NOISE**
NACHGIEBIGE LEICHTE BETONUNTERSCHICHT MIT WIEDERVERWERTETEM KAUTSCHUK AUS ALTEN REIFEN MIT REDUZIERTEM TRITTSCHALL
BÉTON ÉLASTIQUE LÉGER SOUS-COUCHE DE BASE AVEC DU CAOUTCHOUC RECYCLÉ À PARTIR DE PNEUS MIS AU REBUT AVEC RÉDUCTION DE BRUIT D'IMPACT À LA MARCHE

(30) Priority: 03.10.2014 IT MI20141728
(43) Date of publication of application: 09.08.2017
(73) Proprietor: ITALCEMENTI S.p.A., 24121 Bergamo (IT)
(72) Inventor: SGOBBA, Sara, I-24125 Bergamo (IT); MORBI, Alessandro, I-24067 Sarnico (BG) (IT); MOLFETTA, Marcello Antonio, I-72023 Mesagne (BR) (IT); MARANO, Giuseppe Carlo, I-70126 Bari (IT)
(74) Representative: De Gregori, Antonella
(86) International application number: PCT/IB2015/057547
(87) International publication number: WO 2016/051382

(56) References cited:
- EP-A1- 1 052 333
- CN-B- 102 249 614
- Francesco Asdrubali ET AL: "LIGHTWEIGHT SCREEDS MADE OF CONCRETE AND RECYCLED POLYMERS: ACOUSTIC, THERMAL, MECHANICAL AND CHEMICAL CHARACTERIZATION", , 1 July 2011 (2011-07-01), page 3, XP055087296, Retrieved from the Internet: URL:http://www.ciriaf.it/ft/File/Pubblicaz ioni/pdf/1550.pdf [retrieved on 2013-11-08]
- ELDIN ET AL: "Rubber - Tire Particles as Concrete Aggregate", JOURNAL OF MATERIALS IN CIVIL ENGINEERING, ISION, US, vol. 5, no. 4, 1 November 1993 (1993-11-01), pages 478-496, XP009174061, ISSN: 0899-1561

## Description

The present invention relates to a lightweight resilient concrete sub-base layer with recycled rubber from discarded tyres, with reduced walking impact noise.

In particular, said sub-base layer has specific thermal and sound insulation and ductility properties.

The state of the art already describes the use of discarded tyres in concrete (CLS) or cement mixes.

The necessity of finding alternative uses for discarded rubber tyres (PFU), arose in fact with the need for improving various characteristics of concrete mixtures. Depending on the applications for which it is destined, in fact, concrete (CLS) must have a low specific weight, a high toughness and/or impact strength. Although CLS as such is the most widely-used building material, it does not always satisfy these requirements.

The use in concrete has therefore been developing in the state of the art, of rubber particles obtained from discarded tyres (PFU) as constituent, with use of the product thus obtained in the production of sound-absorbing cementitious end-products for road application. More recently, recycled rubber particles have been used in concrete mixtures, again in substitution of aggregates based on natural stone materials, in order to obtain a light concrete.

In particular, in technical literature, the term "Rubber Concrete" or "Rubber Modified Concrete" normally indicates a mixture consisting of cement, natural aggregates and recycled tyre rubber. The term "Rubber mortar" indicates the mixture of cement mortar with rubber.

The rubber used for these applications comes from post-consumer car or truck tyres subjected to mechanical crushing treatment or cryogenic processes. Furthermore, in relation to the applications and performances required by the end-material, the rubber is used "as such" or, in some cases, it has been previously treated, by removing the textile component or unthreading the steel fibres. In other cases, the surface of the rubber has been subjected to various kinds of pre-treatment for consolidating the adherence between cement paste and rubber obtaining a marked improvement in some of the final properties of CLS. An example of pre-treatment of rubber coming from discarded tyres (PFU) described in the state of the art is a surface treatment of the rubber with sodium hydroxide. This pre-treatment increases the adherence between rubber particles and cement matrix, thus obtaining an improvement in the wear resistance and flexural strength.

Rubber aggregates have generally only been used in partial substitution of natural aggregates in concrete mixtures.

According to the state of the art, the addition of rubber tyre particles causes a reduction in the physical and mechanical properties of the starting concrete, but at the same time provides a higher dynamic energy absorption capacity with respect to the starting concrete. The reduction in the mechanical properties is proportional to the increase in the fraction of rubber by volume, according to a relation of the non-linear type.

With the addition of rubber, concrete under load becomes relatively ductile, showing significant deformation capacities before breaking.

Furthermore, concretes with rubber particles (in substitution of a quantity ranging from 10% to 30% by volume of the aggregate in natural materials) have lower thermal conductivity coefficients and a higher sound absorption with respect to a traditional concrete.

On the basis of the properties indicated above, concrete with recycled rubber can be used in architectonic applications, road constructions which do not require high resistances, panels that require a low specific weight, building elements and Jersey barriers subject to impact, sound barriers (sound-absorbing), and in the construction of railways for fixing the rails to the ground.

Examples of these applications are indicated in patent applications WO2009035743, WO2000027774 and RU-A-2353603, relating to cement mixtures, rubber particles and natural aggregates, for general uses for concrete with latex, cementitious panels and mortars, for radiation-shielding applications and for uses such as perimetric walls with light concrete blocks, respectively. A further example of use of recycled rubber particles in concrete is disclosed in the article of Eldin et al. "Rubber-Tire Particles as Concrete aggregate" (Journal of Materials in Civil Engineering, Vol. 5, No.4, Nov. 1993). The article of Asdrubali et al. "Lightweight screeds made of concrete and recycled polymers: acoustic, thermal, mechanical and chemical characterization" (Forum Acusticum 2011, 27 June - 1 July 2011, Denmark) discloses the use of a recycled aggregate coming from sheaths of electric wires, containing rubber, plastics and metal, in the achieving of a lightweight screed: said screed is inserted into a layered structure, foreseeing also an acoustic insulation layer consisting of a "mat" in crosslinked polyethylene. The values of walking impact noise reduction reported in said article can thus be attributed neither to the lightweight screed nor to the type of aggregate used in said screed and, anyway, the same authors affirm that said values are contradictory.

The necessity of finding alternative uses for discarded tyre rubbers (PFU), has currently arisen with the need for improving various characteristics of concrete in order to make it a material capable of absorbing the energy developed by dynamic-type actions (impact and vibrations).

Due to the above-mentioned properties, an interest has arisen in the production of concrete sub-base layers for floors containing discarded rubber aggregates (PFU).

A sub-base layer is a building element having a variable thickness depending on the type of environment and purpose for which it is intended (for example in a building, it can have a thickness ranging from 4 to 20 cm).

The sub-base is a layer which lies between the floor and screed, which englobes and protects the pipes and technological systems installed on the floor, it is thermally and acoustically insulating, it receives the overlying structural layer called screed.

A screed is a building element having a variable thickness, envisaged for reaching the project quotas, distributing the load of the overlying elements and providing a laying surface suitable for the type of flooring envisaged.

The traditional sub-base is normally produced with the use of three materials used in suitable proportions: cement, inert aggregate (sand and/or grit, for example) and water. Superfluidifying or aerating additives can be possibly added. The dosage of the various elements varies on the basis of the type of environment and destination of use of the floor (internal or external, for civil or industrial purposes). Other constituents are very often present, such as, for example, polystyrene or other light aggregates, used for reducing the specific weight of the sub-base layer.

A screed is normally produced with the use of mortars prepared with cement binders or based on anhydrite; depending on whether it is layed in adherence with a bearing sub-base layer (for example a reinforced concrete floor), on a desolidarization layer (for example a vapour barrier) or on a thermal and/or sound insulation layer, it is respectively called "adherent", "desolidarized" or "floating" (MAPEI, Quaderno tecnico "Esecuzione di massetti per la posa di pavimenti" (Technical notebook "Screeds for floor laying).

In particular, in the present invention, reference will be made to the stratigraphy of the "floating" type.

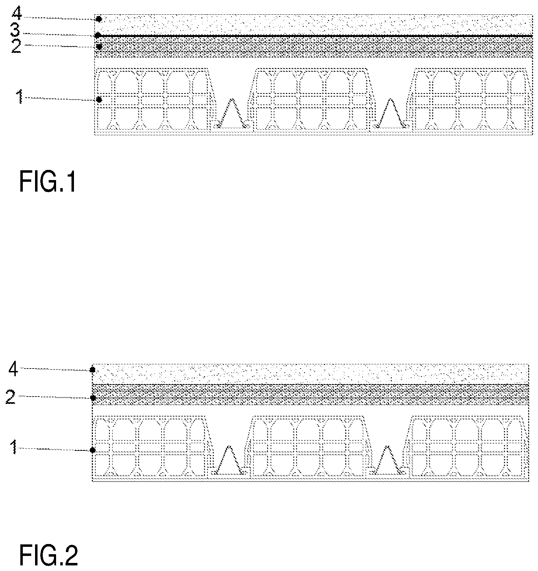

As shown in figure 1, the "floating" stratigraphy consists of:
- Screed (4);
- Sound insulation layer typically consisting of a "pad" made of a resilient material (3), necessary for meeting clearly defined performance requirements with respect to sound insulation from walking impact noise;
- Sub-base layer (2);
- Floor (1).

In this typical example of floating stratigraphy, there can also be a thermal insulation layer or radiating panel between the screed (4) and the resilient layer (3).

In order to guarantee the required sound insulation performances against impact noise, an adequate installation of the resilient pad is necessary. In order to obtain optimum results, it is in fact fundamental to adopt some necessary and indispensable expedients in the construction and laying phase, which consequently has numerous critical aspects.

The present invention therefore proposes to solve the technical problem linked to the critical nature of the installation of the resilient pad, by proposing a simplified stratigraphy without said pad, wherein the sub-base layer is also capable of exerting a resilient function.

An objective of the present invention is therefore to propose a lightweight sub-base layer which is capable of contemporaneously satisfying the thermoacoustic characteristics previously indicated, of a "floating" stratigraphy, and a high vibrational energy absorption, in particular a reduction in walking impact noise, which overcomes the drawbacks of the products according to the state of the art, avoiding the installation of additional resilient layers (such as the pad (3) of figure 1). Figure 2, in fact, shows the simplified stratigraphy which envisages:
- Screed (4);
- Sub-base layer (2);
- Floor (1)

A further objective of the present invention is the use of said sub-base layer in applications which require reduced walking impact noise.

An object of the present invention relates to a concrete sub-base layer with recycled rubber from discarded tyres (PFU), said concrete consisting of cement, aggregates water and possibly polymeric additives, wherein the aggregates in the concrete sub-base layer consist exclusively of pretreated recycled rubber from discarded tyres (PFU) and have a particle size lower than 20 mm and the rubber from discarded tyres is pre-treated by storage of PFU rubber in water for a time ranging from 7 days to 40 days or by washing the PFU rubber with latex and wherein the concrete mixture comprises from 35 to 50% by weight of cement, from 10 to 18% by weight of water and from 30 to 50% by weight of aggregates., and wherein said concrete has: a compressive strength greater than 1 MPa, preferably greater than 2 MPa at 28 days; a density lower than 1,100 kg/m³, preferably lower than 1,000 kg/m³; an elastic modulus lower than 5,000 MPa, preferably lower than 3,000 MPa.

A further object of the present invention relates to a multilayer element comprising a sub-base layer according to the present invention, which forms a layer of the multilayer element in direct contact with a screed.

A fundamental advantage of the sub-base according to the present invention is that it is characterized by having excellent thermal insulation properties and surprisingly a significant reduction in walking impact noise. In this respect, it should be pointed out that a material having a good thermal insulation is not necessarily characterized by also reducing the walking impact noise. The sound wave, in fact, vibrates differently in relation to the means through which it propagates. It should be accordingly observed that the sole presence of discarded rubber aggregate or PFU, does not in itself constitute a sufficient condition for reaching the requirements of impact sound insulation.

The use of lightweight concrete blocks, in fact, traditionally used for the production of sub-base layers, does not guarantee the above performances. For this specific reason, resilient layers positioned between the sub-base layer and the screed are normally used, which guarantee the required acoustic performances.

Within the context of the present invention, the term "cement" refers to a powder material which, when mixed with water, forms a paste which hardens by hydration, and which, after hardening, maintains its resistance and stability even under water. In particular, the cements according to the present invention comprise so-called Portland cement, slag cement, pozzolan cement, fly-ash cement, calcined shale cement, limestone cement and so-called composite cements. Cements of type I, II, III, IV or V according to the standard EN197-1 can be used, for example. A particularly preferred cement is CEM II cement. The preferred cement class is class 42.5. The cement can be independently grey or white.

The term "inert aggregates" according to the present invention generally refers to granular materials used in the building industry (see also standard UNI EN 12620) that can be of a siliceous, limestone or basalt nature, round or crushed.

The aggregate can be natural, industrial or recycled. A natural aggregate is an aggregate of a mineral origin which has been subjected only to mechanical processing, whereas an industrial aggregate is always an aggregate of a mineral origin deriving however from an industrial process that involves a thermal or other kind of modification. Finally, a recycled aggregate is an aggregate resulting from the processing of inorganic material previously used in the building industry.

The aggregates consisting of pretreated recycled rubber from discarded tyres used in the sub-base layer according to the present invention come from the recycling and treatment of discarded car and truck tyres (PFU) and are generically indicated as PFU aggregates.

The discarded tyres are subjected to the following treatment for the production of PFU aggregates: in a first phase, the crushing of the same is effected, followed by a sieving phase. The aggregate component consisting of pretreated recycled rubber from discarded tyres, present in the sub-base layer according to the present invention, is then subjected to a further treatment in which the crushed and sieved aggregate, with a particle size lower than 20 mm, is stored in water for a time ranging from 7 days to 40 days, preferably more than 28 days, even more preferably about 30 days, or it is subjected to washing with latex, before being mixed with cement, inert materials and water. Pretreatment processes of discarded rubber are described in greater detail in patent application EP 14162836.2.

The PFU aggregates were divided into three particle-size groups.

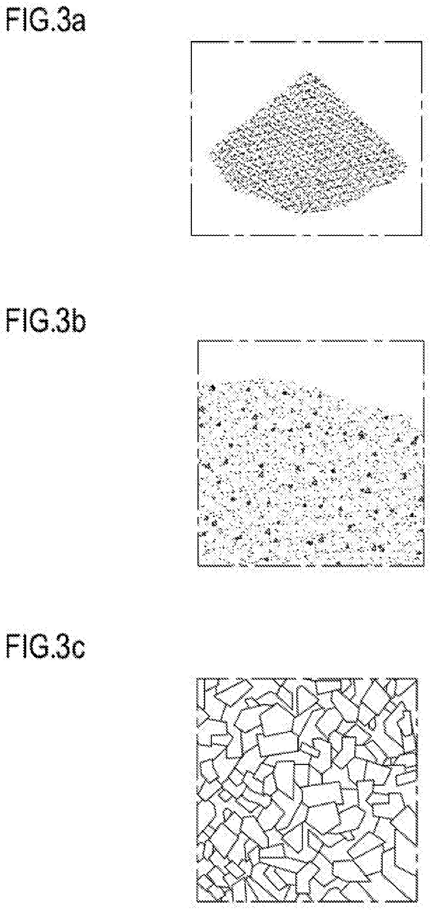

Table 1 shows the main characteristics of the three sizes. Figures 3a, 3b and 3c show the particle-size fractions in PFU rubber as appearing after sieving.

**Table 1**

| **Particle-size fraction label** | **Particle-size extremes** | **Density** |
|---|---|---|
| | mm | [kg/l] |
| G0 | < 1 | 1.09 |
| G1 | 3-4 | 1.1 |
| G 20 | < 20 | 1.05-1.18 |

Figures 3a, 3b and 3c show how the fractions G0 and G1 appear as monogranular sands and with rounded granules, whereas the fraction G20 has a poor shape coefficient (flattened form).

The aggregates consisting of pretreated recycled rubber from discarded tyres present in the composition of the sub-base layer according to the present invention consist of sizes defined as G0, G1 and G20, i.e. with a particle size lower than 20 mm. The size G0 also comprises particle sizes lower than 63 microns, i.e. particle sizes that pass through sieves with a smaller mesh size.

The aggregates, as previously indicated, always consist exclusively of pretreated recycled rubber (PFU) aggregates.

The concrete sub-base layer according to the present invention does not necessarily require the addition of superfluidifying/water-reducing additives for obtaining the desired results, even if starting from water/cement ratios ranging from 0.3 to 0.6.
If aerating and superfluidifying additives are to be used, however, these can be selected from naphthalene sulfonates (SN), melamine sulfonates (SM), modified lignin sulfonates (MLS) or polycarboxylic compounds such as polyacrylates and surfactants.

For a complete homogenization, the cement, water, aggregate from inert materials and pretreated PFU aggregate are mixed in a cement mixer or other similar device, in suitable proportions, until a homogeneous paste free of clots and having an appropriate consistency, is obtained. The paste is then applied to the support, levelling it with a straightedge and adequately compacting it.

Once the paste has been prepared, it is best to apply it within half an hour (time referring to a temperature of about 20°C).

It then requires a curing time of about 28 days, i.e. the canonical time of cement mixes.

A further object of the present invention relates to the use of a concrete sub-base layer with pretreated recycled rubber from discarded tyres, for applications with reduced walking impact noise, in particular for flooring preferably with a reduction in walking impact noise equal to or higher than ΔLw 17 dB.

The sub-base layer according to the present invention is used in a multilayer element comprising said sub-base layer and a screed and wherein there is no resilient layer between the sub-base layer and the screed.

The main advantage of the sub-base layer according to the present invention is that it allows a significant reduction in walking impact noise.

A further advantage linked to the presence of aggregates from recycled PFU rubber, pretreated in water or with latex according to what is indicated above, is the trend of the compressive strength with time: the sub-base layer according to the present invention comprising said aggregates, in fact, does not have, or to a very limited extent, retrogradation phenomena of the compressive strength and elastic modulus, or the appearance of cracking or surface delamination phenomena typical of sub-base layers produced with non-pretreated aggregates. The pre-treatment of the recycled rubber (PFU) aggregate, although not having an impact on the acoustic properties of reduction of walking impact noise, allows achieving a product with very good properties of stability and durability.

The characteristics and advantages of the present invention will appear evident from the following examples provided for illustrative and non-limiting purposes.

### Example 1

A sub-base layer was prepared with the composition indicated as mixture 1 in Table 2 below.

**Table 2**

| | | Mixture 1 |
|---|---|---|
| Rubber Granule PFU G1 (3,8-5) | [Kg/m³] | 367 |
| Cement CEM 42,5R II-A/LL | [Kg/m³] | 440 |
| Additive (Creactive Quattro, an acrylic superfluidifying additive) | [Kg/m³] | 2.2 |
| Additive (Esapon, a surfactant) | [Kg/m³] | 0.2 |
| Water | [Kg/m³] | 165 |
| Theoretical density | [Kg/m³] | 974 |

The rubber granule PFU G1 (3.8-5), forming the 100% of the aggregate of the concrete, is a rubber granule pre-treated as follows: the aggregate is crushed and sieved, with a particle size lower than 20 mm, and is stored in water for a time of about 30 days.

### Example 2

Two different stratigraphies of a horizontal partition that divides two areas (one overlying in which walking impact noise is generated and the other underlying in which said noise is detected), were compared from the viewpoint of walking impact noise reduction as described hereunder:
- Stratigraphy 1: floor (thickness 24 cm), sub-base layer object of the invention (density 1,000 kg/m³ according to the standard UNI EN 12390-7, thickness 14 cm), screed (density 1,600 kg/m³ UNI EN 12390-7, thickness 10 cm).
- Stratigraphy 2: stratigraphy equivalent to stratigraphy 1 consisting of floor (thickness 24 cm), traditional lightweight sub-base layer (with only natural inert aggregate) having the same density and thickness as the sub-base layer according to the invention and screed (density 1,600 kg/m³ UNI EN 12390-7, thickness 10 cm).

The compressive strength is measured according to the standard UNI EN 12390-3 and for the sub-base layer of stratigraphy 1 is equal to 2.3 MPa at 28 days.

The density is measured according to the standard UNI EN 12390-7, whereas the elastic modulus is measured according to the standard ASTM C215 and for the sub-base layer of stratigraphy 1 is equal to 3.6 GPa at 28 days.

The sound insulation performance to walking impact noise of the stratigraphies examined is evaluated by means of the calculation model (EN 12354) of impact sound pressure L'_{n,W} expressed in dB. This parameter, defined by DPCM 5/12/97, characterizes the capacity of a floor of reducing impact noise.

The impact noise level requirement (L'_{n,W}) therefore relates to the impact noise perceived within living environments and generated by different housing units. The lower the L'_{n,W} value, the better the performances of the floor will be. The same standard defines the maximum L'_{n,W} values allowed for residential buildings. The walking impact noise levels determined in the two stratigraphies were compared with these maximum L'_{n,W} values. Table 3 below indicates the results of the calculation of the impact sound pressure (L'_{n,W}) in the two stratigraphies examined, compared with the maximum limits allowed by standard regulations.

**Table 3**

| | L'_{n,W} | Maximum L'_{n,W} allowed |
|---|---|---|
| Stratigraphy 1 | 60.4 dB | 63 dB |
| Stratigraphy 2 | 72.6 dB | 63 dB |

The comparison shows that stratigraphy 1, object of the invention, satisfies the sound requirement even without a resilient layer (pad). Stratigraphy 2 having the same density and thickness obviously does not meet the requirements of law and has an absolutely insufficient performance of sound insulation against walking impact noise.

## Claims

1. A concrete sub-base layer with recycled rubber from discarded tyres (PFU), said concrete having a compressive strength greater than 1 MPa, preferably greater than 2 MPa at 28 days, a density lower than 1,100 kg/m³, preferably lower than 1,000 kg/m³ and an elastic modulus lower than 5,000 MPa, preferably lower than 3,000 Mpa, consisting of cement, aggregates, water and possibly polymeric additives, wherein the aggregates in the concrete sub-base layer consist exclusively of pretreated recycled rubber from discarded tyres (PFU) and have a particle size lower than 20 mm and the rubber from discarded tyres is pre-treated by storage of PFU rubber in water for a time ranging from 7 days to 40 days or by washing the PFU rubber with latex and wherein the concrete mixture comprises from 35 to 50% by weight of cement, from 10 to 18% by weight of water and from 30 to 50% by weight of aggregates.

2. The concrete sub-base layer according to claim 1, wherein the concrete mixture comprises from 30 to 40% by weight of aggregates from pretreated recycled rubber (PFU), said percentage referring to the total weight of concrete.

3. The concrete sub-base layer according to one or more of the previous claims, wherein the aggregates of pre-treated recycled rubber from discarded tyres have a particle size ranging from 1 to 10 mm, more preferably from 2 to 5 mm, and the rubber from discarded tyres is pre-treated by storage of PFU rubber in water for more than 28 days, even more preferably equal to 30 days, or by washing the PFU rubber with latex.

4. Use of a concrete sub-base layer with pretreated recycled rubber from discarded tyres, according to any of the claims from 1 to 3, for applications having reduced walking impact noise, in particular for flooring.

5. Use of a concrete sub-base layer according to claim 4, with a reduction in walking impact noise equal to or higher than ΔLw 17dB.

6. Use of a concrete sub-base layer according to claim 5, in an element having a multilayer structure comprising said sub-base layer and a screed, wherein there is no resilient layer or pad between the sub-base layer and screed.

7. A multilayer element comprising a sub-base layer according to one or more of claims 1-3, said sub-base layer forming a layer in direct contact with a screed.

## Patentansprüche

1. Beton-Untergrundschicht mit Recycling-Kautschuk aus Altreifen (PFU), wobei der Beton eine Druckfestigkeit von mehr als 1 MPa, vorzugsweise mehr als 2 MPa nach 28 Tagen, eine Dichte von weniger als 1.100 kg/m³, vorzugsweise weniger als 1.000 kg/m³, und einen E-Modul von weniger als 5.000 MPa, vorzugsweise weniger als 3.000 MPa aufweist, bestehend aus Zement, Zuschlagstoffen, Wasser und gegebenenfalls Polymerzusatzstoffen, wobei die Zuschlagstoffe in der Beton-Untergrundschicht ausschließlich aus vorbehandeltem Recycling-Kautschuk aus Altreifen (PFU) bestehen und eine Teilchengröße von weniger als 20 mm aufweisen und der Kautschuk aus Altreifen durch Lagerung von PFU-Kautschuk in Wasser über einen Zeitraum von 7 Tagen bis 40 Tagen oder durch Waschen des PFU-Kautschuks mit Latex vorbehandelt wird und wobei das Betongemisch 35 bis 50 Gew.-% Zement, 10 bis 18 Gew.-% Wasser und 30 bis 50 Gew.-% Zuschlagstoffe umfasst.

2. Beton-Untergrundschicht gemäß Anspruch 1, wobei die Betonmischung 30 bis 40 Gew.-% Zuschlagstoffe aus vorbehandeltem Recycling-Kautschuk (PFU) umfasst, wobei sich der Anteil auf das Gesamtgewicht des Betons bezieht.

3. Beton-Untergrundschicht gemäß einem oder mehreren der vorhergehenden Ansprüche, wobei die Aggregate aus vorbehandeltem Recycling-Kautschuk aus Altreifen eine Teilchengröße im Bereich von 1 bis 10 mm, bevorzugter von 2 bis 5 mm, aufweisen und der Kautschuk aus Altreifen durch Lagerung von PFU-Kautschuk in Wasser für mehr als 28 Tage, noch bevorzugter gleich 30 Tage, oder durch Waschen des PFU-Kautschuks mit Latex vorbehandelt wird.

4. Verwendung einer Beton-Untergrundschicht mit vorbehandeltem Recycling-Kautschuk aus Altreifen gemäß einem der Ansprüche 1 bis 3 für Anwendungen mit reduziertem Trittschall, insbesondere für Bodenbeläge.

5. Verwendung einer Beton-Untergrundschicht gemäß Anspruch 4, mit einer Reduzierung des Trittschalls gleich oder höher als ΔLw 17 dB.

6. Verwendung einer Beton-Untergrundschicht gemäß Anspruch 5 in einem Element, das einen mehrschichtigen Aufbau aufweist, umfassend die Untergrundschicht und einen Estrich, wobei zwischen der Untergrundschicht und dem Estrich keine nachgiebige Schicht oder Unterlage vorhanden ist.

7. Mehrschichtiges Element, das eine Untergrundschicht gemäß einem oder mehreren der Ansprüche 1-3 umfasst, wobei die Untergrundschicht eine Schicht in direktem Kontakt mit einem Estrich bildet.

## Revendications

1. Couche de fondation en béton avec du caoutchouc recyclé provenant de pneus usés (PFU), ledit béton ayant une résistance à la pression supérieure à 1 MPa, de préférence supérieure à 2 MPa à 28 jours, une densité inférieure à 1100 kg/m³, de préférence inférieure à 1000 kg/m³ et un module d'élasticité inférieur à 5000 MPa, de préférence inférieur à 3000 MPa, constitué de ciment, d'agrégats, d'eau et d'additifs possiblement polymères, dans laquelle les agrégats dans la couche de fondation en béton sont exclusivement constitués de caoutchouc recyclé prétraité provenant de pneus usés (PFU), et ont une taille particulaire inférieure à 20 mm et le caoutchouc provenant des pneus usés est prétraité par stockage de caoutchouc PFU pendant une période de temps comprise entre 7 jours et 40 jours ou par lavage du caoutchouc PFU avec du latex et dans laquelle le mélange de béton comprend de 35 à 50 % en poids de ciment, de 10 à 18 % en poids d'eau et de 30 à 50 % en poids d'agrégats.

2. Couche de fondation en béton selon la revendication 1, dans laquelle le mélange de béton comprend de 30 à 40 % en poids d'agrégats provenant de caoutchouc recyclé prétraité (PFU), ledit pourcentage faisant référence au poids total de béton.

3. Couche de fondation en béton selon l'une quelconque des revendications précédentes, dans laquelle les agrégats de caoutchouc recyclé prétraité provenant de pneus usés ont une taille particulaire comprise entre 1 et 10 mm, plus préférablement comprise entre 2 et 5 mm, et le caoutchouc provenant de pneus usés est prétraité par stockage de caoutchouc PFU dans l'eau pendant plus de 28 jours, encore plus préférablement égal à 30 jours, ou par lavage du caoutchouc PFU avec du latex.

4. Utilisation d'une couche de fondation en béton avec du caoutchouc recyclé prétraité provenant de pneus usés, selon l'une quelconque des revendications 1 à 3, destiné à des applications ayant un bruit d'impact de marche réduit, en particulier pour le plancher.

5. Utilisation d'une couche de fondation en béton selon la revendication 4, avec une réduction du bruit d'impact de marche supérieure ou égale à ΔLw 17dB.

6. Utilisation d'une couche de fondation en béton selon la revendication 5, dans un élément ayant une structure multicouche comprenant ladite couche de fondation et une chape, dans laquelle il n'y a pas de couche ou coussin résilient entre la couche de fondation et la chape.

7. Élément multicouche comprenant une couche de fondation selon l'une quelconque des revendications 1 à 3, ladite couche de fondation formant une couche en contact direct avec une chape.
